# EUROPEAN PATENT SPECIFICATION

(11) **EP 1 158 868 B1**
(45) Date of publication and mention of the grant of the patent: **16.06.2004**
(21) Application number: 00917714.8
(22) Date of filing: 03.03.2000
(51) Int. Cl.: A23K 1/16, A23K 1/18

(54) **PROCESS FOR PRESERVING SKELETAL MUSCLE MASS IN GERIATRIC DOGS**
VERFAHREN ZUR KONSERVIERUNG VON SKELETTMUSKELMASSE IN GERIATRISCHEN HUNDEN
PROCEDE PERMETTANT DE CONSERVER LA MASSE DE MUSCLES SQUELETTIQUES CHEZ DES CHIENS D'AGE AVANCE

(30) Priority: 05.03.1999 US 122983 P; 03.03.2000 US 518116
(43) Date of publication of application: 05.12.2001
(73) Proprietor: THE IAMS COMPANY, Dayton, Ohio 45414 (US)
(72) Inventor: DAVENPORT, Gary, Mitchell, Dayton, OH 45415 (US); HAYEK, Michael, Griffin, Dayton, OH 45415 (US)
(74) Representative: Clemo, Nicholas Graham
(86) International application number: PCT/US2000/005586
(87) International publication number: WO 2000/051443

(56) References cited:
- WO-A-00/47049
- WO-A-99/51108
- C.C. WILLIAMS ET AL.: "Effect of dietary protein on whole-body protein turnover and endocrine functionality in geriatric and young-adult dogs" FASEB JOURNAL., vol. 12, no. 5, 1998, page A878 XP002142344 FED. OF AMERICAN SOC. FOR EXPERIMENTAL BIOLOGY, BETHESDA, MD., US ISSN: 0892-6638
- E. HUFF-LONERGAN ET AL.: "Impact of age and diet on calpastatin and tropinin-T in young and oild dogs" FASEB JOURNAL., vol. 13, no. 5, 1999, page A938 XP002142345 FED. OF AMERICAN SOC. FOR EXPERIMENTAL BIOLOGY, BETHESDA, MD., US ISSN: 0892-6638
- M.G. HAYEK ET AL.: "Nutrition and aging in companion animals" JOURNAL OF ANTI-AGING MEDICINE, vol. 1, no. 2, 1998, pages 117-123, XP000924833
- R.J. KEARNS ET AL.: "Effect of age, breed and dietary omega-6 (n-6) : omega-3 (n-3) fatty acid ratio on immune function, eicosanoid production, and lipid peroxidation in young and aged dogs" VETERINARY IMMUNOLOGY AND IMMUNOPATHOLOGY, vol. 69, no. 2-4, 1999, pages 165-183, XP000924834 AMSTERDAM, NL ISSN: 0165-2427

## Description

This invention relates to a method for preserving skeletal muscle mass in geriatric dogs, and more particularly, to such a method which includes providing a diet which includes beneficial amounts of animal-based protein to preserve skeletal muscle mass, reduce body fat and improve the overall body composition of geriatric dogs.

Advanced age in mammals is often accompanied by a loss of skeletal muscle mass and a loss of muscle strength. Muscle growth is the result of protein synthesis and protein degradation. Therefore, decline in muscle mass may be due to an imbalance in the protein synthesis/protein degradation ratio of skeletal muscle protein. Various muscle-specific enzymatic processes may play a role in regulating protein turnover and protein degradation in skeletal muscle such as the ATP-dependent ubiquitin-proteasome pathway and the calcium-dependent enzyme µ-calpain and its endogenous inhibitor calpastatin.

Other factors which may affect loss of skeletal muscle mass and strength include age-related changes in the contractile mechanism. A major regulatory component of the contractile mechanism is troponin-T, which is one of three subunits of the troponin protein molecule which includes troponin-I and troponin-C. Other muscle-specific proteins include actin, myosin, and tropomyosin. Troponin and tropomysin control the myosin-actin interactions involved in calcium-mediated muscle contractions. Troponin-i inhibits the interaction of actin and myosin in non-contracted muscle, while troponin-C contains a calcium-binding site that initiates muscle contractions. Troponin-T functions to bind the other troponin subunits to tropomyosin.

Variations in troponin-T isoform expression may be related to differences in calcium sensitivity of tension development and maximal velocity of shortening of skeletal muscle fibers. Therefore, variations in troponin-T isoform expression may explain some loss of muscle strength and tone. Differences in myofibrillar protein isoform expression may also impact the rate of protein turnover as different isoforms may exhibit variable susceptibilities to proteolysis.

Accordingly, there is a need in the art for a method of regulating skeletal muscle protein in animals such as geriatric dogs to reduce muscle protein degradation and the loss of skeletal muscle mass.

The present invention addresses that need by providing a process for reducing body fat and preserving skeletal muscle mass in geriatric dogs to mitigate the effects of age by feeding the dogs a diet containing an effective amount of animal-based protein. By geriatric dogs, it is meant those dogs which have reached a senior age associated with their breed and/or have begun to exhibit signs of aging. For giant breeds, the senior stage is considered to begin between 5 to 7 years of age; for medium breeds, 7 to 9 years; and for small breeds, between 8 to 10 years.

Preferably, the process comprises feeding a geriatric dog a diet including greater than 16% by weight protein on a dry matter basis, and more preferably, from 24 to 34% by weight, where the protein is provided in the diet as an animal-based protein source.

Preferably, the diet comprises, on a dry matter basis, 24 to 34% by weight protein, 9 to 22% by weight fat, and 1 to 6% by weight dietary fiber.

The diet of the present invention has also been found to reduce body fat in geriatric dogs and to improve the body composition of geriatric dogs. By body composition, it is meant the total quantity of lean, fat and bone in the body. By improved body composition, it is meant that the dogs exhibit a greater percentage of lean tissue, and a lower percentage of body fat. WO 99/51108 discloses compositions for improving glucose and insulin metabolism in companion animals. WO 00/47049 discloses methods for reducing hip joint laxity.

Accordingly, it is a feature of the invention to provide a process for preserving skeletal muscle mass in geriatric dogs by providing an effective amount of animal-based protein in the diet of the animals. It is a further feature of the invention to provide a process for improving the body composition and reducing the body fat of geriatric dogs. These, and other features and advantages of the present invention, will become apparent from the following detailed description and accompanying drawings.
Fig. 1 is an immunoblot showing myofibrillar protein fraction from geriatric and young canines fed diet A;
Fig. 2 is an immunoblot showing myofibrillar protein fraction from geriatric and young canines fed diet B; and
Fig. 3 is an immunoblot showing myofibrillar protein fraction from geriatric and young canines fed diet C.

The present invention provides a dietary composition which contains a source of animal-based protein in an amount greater than about 16% protein by weight on a dry matter basis, and preferably between 24 to 34% by weight. Such a diet has been found to produce a shift in the troponin-T isoform expression in old dogs which is similar to the troponin-T expression of younger dogs. It is believed that the dietary composition of the present invention, when fed to geriatric dogs, results in a reduction in skeletal muscle protein degradation and a preservation of skeletal muscle mass.

The dietary composition may be provided in the form of any suitable pet food composition which also provides adequate nutrition for the animal. For example, a preferred canine diet for use in the present invention contains from 24 to 34% by weight protein, 9 to 22% by weight fat, and 1 to 6% by weight dietary fiber.

Preferably, chicken is the primary dietary protein source; however, other suitable animal protein sources include lamb, beef, fish, duck, deer, rabbit, and pork.

In order that the invention may be more readily understood, reference is made to the following examples which are intended to illustrate the invention, but not limit the scope thereof.

### Example 1

Twenty-three female beagles averaging 4 years of age or less (n=12) and over 9 years of age (one 11 year old, one 12 year old and ten 10 year old) (n=12) were fed diets containing either 16% (Diet A) or one of two 32% protein formulations (four dogs per age group per diet). The two 32% protein formulations differed in the amount of animal-based protein. The low animal-based protein diet (Diet B) used chicken protein at the same level as was used for the 16% diet with the balance of the protein from plant protein. The high animal-based protein diet (Diet C) used chicken as the primary dietary protein source. The composition of diets A, B and C is shown below in Table 1. plant protein. The high animal-based protein diet (Diet C) used chicken as the primary dietary protein source. The composition of diets A, B and C is shown below in Table 1.

**TABLE 1**

| Diet Composition of Experimental Diets | | | |
|---|---|---|---|
| Ingredient | Diet A (16% CP, meat) | Diet B (32% CP, meat +veg.) | Diet C (32% CP, meat) |
| Refined poultry meal | 18.48 | 18.99 | 39.98 |
| Corn gluten meal | 0 | 23.94 | 0 |
| Ground corn | 16.49 | 33.43 | 33.58 |
| Corn starch | 37.85 | 0 | 5.75 |
| Poultry fat | 11.34 | 9.45 | 8 |
| Poultry digest | 3 | 3 | 3 |
| Beet pulp | 4 | 4 | 4 |
| Dicalcium phosphate | 3.2 | 2.55 | 1.15 |
| Menhaden oil | 1.1 | 1.1 | 1.1 |
| Brewer's yeast | 1 | 1 | 1 |
| Vitamin premix | 0.9 | 0.35 | 0.35 |
| Potassium chloride | 0.75 | 0.45 | 0.25 |
| Calcium carbonate | 0.65 | 0.75 | 0.55 |
| Ground flax | 0.3 | 0.3 | 0.3 |
| Choline chloride | 0.3 | 0.1 | 0.15 |
| Sodium chloride | 0.25 | 0.25 | 0.25 |
| DL-methionine | 0.2 | 0.15 | 0.4 |
| Mineral premix | 0.2 | 0.2 | 0.2 |

| **Nutrient analysis %** | Diet A | Diet B | Diet C |
|---|---|---|---|
| Protein | 15.41 | 31.35 | 33.02 |
| Fat | 16.43 | 16.82 | 17.56 |
| NFE (starch) | 65 | 66.66 | 66.99 |
| Moisture | 9.77 | 8.02 | 5.97 |
| Ash | 6.2 | 6.36 | 7.4 |
| Fiber | 2.58 | 2.14 | 2.08 |
| Gross energy (kcal/gm) | 4514.08 | 5010.01 | 4947.08 |

The dogs were limit fed to maintain metabolic body size. Prior to the start of the experimental diets, the dogs were fed a 24% animal-based protein diet for approximately 60 days. Immediately preceding the time that the dogs were switched to the experimental diets, a muscle biopsy sample was taken. A second muscle biopsy was taken after 45 days on the experimental diets. Three animals were excluded from the young age group. Animal 1 was excluded because it was 4 years of age, making it significantly older than the other animals (all other young dogs were approximately 1 year of age). Animals 2 and 3 were excluded from the current study because of sampling error. This left three young dogs on diet A, four young dogs on diet B and three young dogs on diet C. There still remained four geriatric dogs on each of the three dietary treatments.

Semitendinosis muscle biopsy samples were immediately frozen in liquid nitrogen after being removed from anesthetized dogs by a licensed veterinarian. These samples were then stored at -80°C until they were used for analysis.

In order to determine the state of the calpastatin molecules, the sarcoplasmic protein fraction from the biopsy samples was isolated and used for chemiluminescent immunoblotting analyses using commercially available monoclonal antibodies against calpastatin. Briefly, a 0.1 gram sample was homogenized with a motor driven Dounce homogenizer in five volumes of extraction buffer (10 mM EDTA, 100 mg/L trypsin inhibitor, 2 µm E-64, 3 mM PMSF and 0.1% B-mercaptoethanol, 100 mM Tris, pH 8.5). Samples were homogenized over three intervals of 20 strokes each for 30 seconds. Homogenized samples were removed from the homogenizers and were transferred into microcentrifuge tubes by using a transfer pipette and rinsing the homogenizing tubes with 100 µl of extraction buffer. Samples were centrifuged for 20 minutes at 10,850 x g at 4°C. After centrifugation, the supernatant was removed from the pellet using a 1 cc glass syringe with a 22 gauge needle. The supernatant was then dialyzed overnight at 8°C against a solution containing 1 mM EDTA, 0.1% B-mercaptoethanol and 40 mM Tris pH 7.5. After dialysis, the protein concentration of the supernatant was determined using the Bradford assay.

Samples for gel electrophoresis were prepared as follows. One hundred micrograms of protein were loaded into each well of a 15% acrylamide separating gel (15% acrylamidelbis, [100:1 acrylamide:bisacrylamide], .375 M Tris-HCl, pH 8.8, 0.1% sodium dodecyl sulfate (SDS), 0.1% ammonium persulfate and 0.67% N,N,N',N'-Tetramethylethylenediamine (TEMED) with a 5% stacking gel (4% acrylamide/bis, [100:1 acrylamide:bisacrylamide], 0.125 M Tris-HCl, pH 6.8, 0.1% SDS, 0.125 TEMED and 0.75% ammonium persulfate. The composition of the running buffer used was 25 mM Tris, 192 mM glycine and 0.1% SDS. Gels were run at 120 V for approximately 195 minutes (until the dye front had run off of the gel). Immediately after the run, the proteins on the gels were transferred to PVDF membranes that had been prewet in 100 % methanol and then in transfer buffer (25 mM Tris, 192 mM glycine and 15% methanol). Gels were transferred for 90 minutes at 90 volts. After transfer, the membranes were blocked for one hour at room temperature in a 5% solution of non-fat dry milk dissolved in PBS-Tween (80 mM Na₂HPO₄, 20 mM NaH₂PO₄, 100 mM NaCl and 0.1% Tween). After blocking, the membranes were incubated in primary antibody (cat # RDI-CALPSTabm, mouse anti-calpastatin, Research Diagnostics Inc. Flanders, NJ) at a dilution of 1:2000 (PBS-Tween:antibody). The primary incubation was done overnight at 8°C. After primary incubation, the membranes were allowed to reach room temperature and were then washed three times (ten minutes per wash) in PBS-Tween. After rinsing, the secondary antibody (Goat-anti-mouse IgG conjugated with horseradish peroxidase, product #A2554, Sigma Chemical Co., St. Louis Mo.) was applied at a dilution of 1:5000 (PBS-Tween:antibody). Incubation in secondary antibody was done at room temperature for one hour. Membranes were then washed three times (ten minutes per wash) in PBS-Tween. The presence of calpastatin was detected using ECL Western Blotting reagents (Amersham Life Science, Arlington Heights, IL) as directed by the manufacturer.

The myofibrillar fraction from selected samples was also subjected to immunoblotting techniques to determine if there was a difference in degradation or in isoform expression of specific µ-calpain substrate proteins. The samples for gel electrophoresis were prepared according to the procedure outlined in Huff-Lonergan et al., "Proteolysis of Specific Muscle structural Proteins by µ-calpain at low pH and Temperature is Similar to Degradation in Postmortem Bovine Muscle", *J. Anim. Sci*. 74:993, 1996 and in Huff-Lonergan et al., "Sodium Dodecyl Sulfate Polyacrylamide Gel Electrophoresis and Western Blotting Comparisons of Purified Myofibrils and Whole Muscle Preparations for Evaluating Titin and Nebulin in Postmortem Bovine Muscle", *J. Anim. Sci*. 74:779, 1996. Gel electrophoresis, immunoblotting and detection of troponin-T were performed as described in Huff-Lonergan et al.

### Results

### Calpastatin

Careful examination of the immunoblots revealed that age had a significant effect upon the intensity of the band that corresponds to intact calpastatin, while dietary treatment did not. Older animals in this study exhibited a much greater intensity of the intact calpastatin band in samples taken both before and after the dietary treatment. This indicates that differences in level of expression and/or differences in modification of calpastatin play an important role in the physiological processes that accompany physiological aging.

### Troponin-T

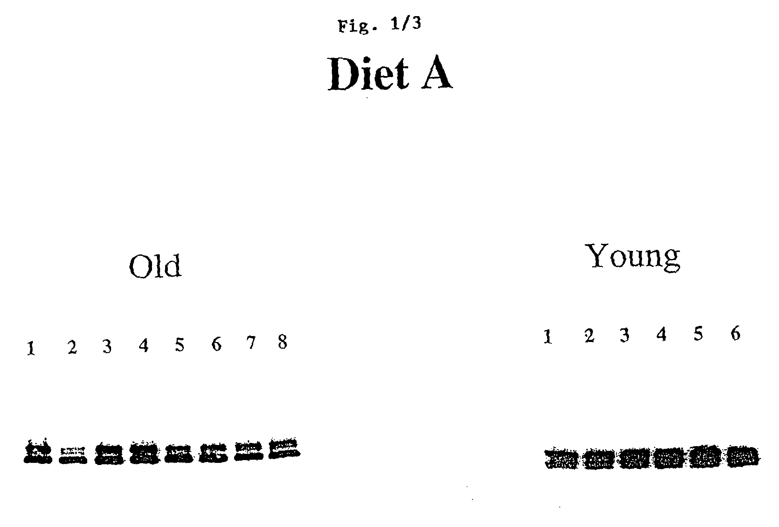

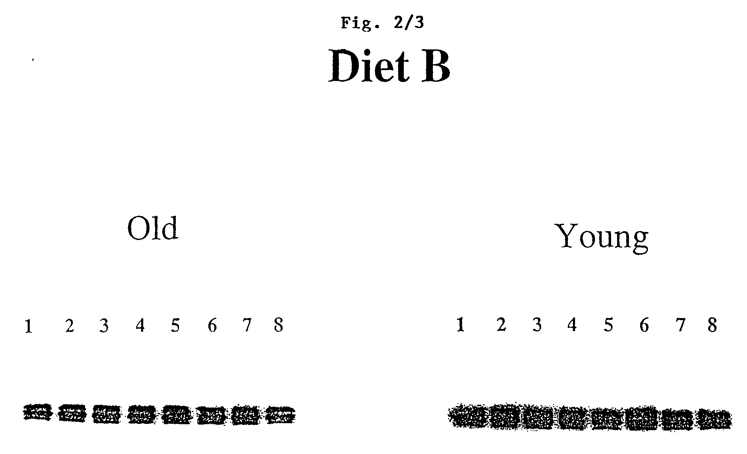

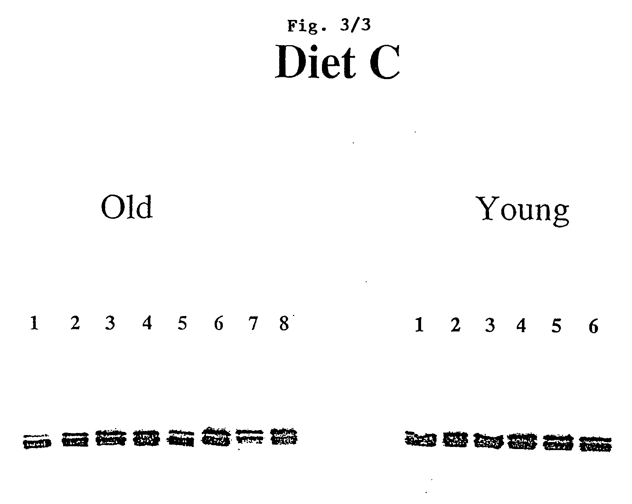

There are numerous isoforms of troponin-T that can be expressed in skeletal muscle. Within this experiment, the pattern of isoform expression of troponin-T was noted to differ in animals of different ages and across dietary treatments. When immunoblots probed for troponin-T were examined, it was apparent that age significantly impacted isoform expression in samples taken both before and after the dietary treatment (see Figures 1, 2, and 3; young vs. old). In samples that were taken at the conclusion of the experimental dietary treatment, it was also noted that diet significantly impacted the expression of the troponin-T isoform pattern. In addition, there was a significant interaction between age and diet. When the immunoblots for the individual combinations of diet and treatment were examined, it was seen that the geriatric canines that were fed diet C showed a shift in their isoform expression pattern. This shift was from that pattern that was expressed in nearly all geriatric canines prior to dietary treatment to an isoform pattern that more closely resembled that seen in the younger canines. This indicates that animal-based protein diets that exceed the level of protein in diet A affect age-induced changes in molecular and cellular events associated with aging canine muscle.

### Body Composition

The body composition of the dogs was assessed using dual-energy X-ray absorptiometry (DEXA) which estimates the total quantity of lean, fat and bone in the body.

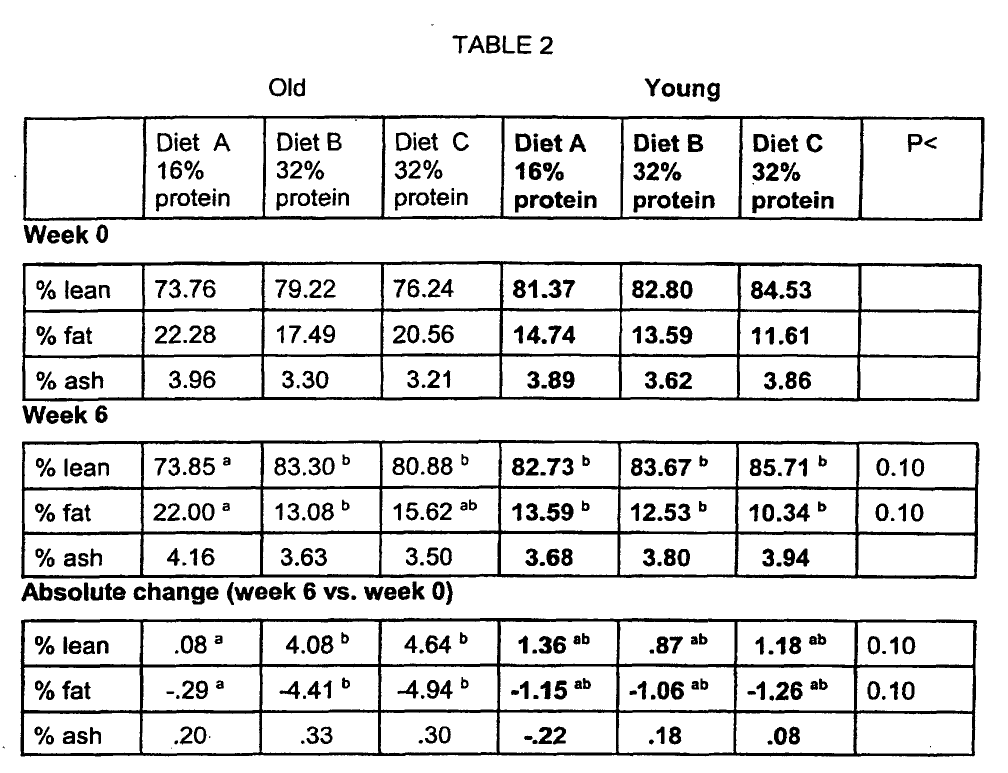

DEXA results showed that after 6 weeks of feeding, geriatric dogs fed diets B and C had greater (P<0.05) percentage of lean tissue and lower (P<0.05) percentage of body fat compared with dogs fed diet A. These changes in body composition were attributed to the effect of high protein diets on the preservation of lean body mass and loss of body fat. In contrast, no differences were noted after 6 weeks in the younger dogs.

Overall, the changes in skeletal muscle protein degradation in geriatric dogs associated with the high animal protein-based diets were reflected in improved body composition compared with dogs fed the lower protein diet or the protein diet which combined animal and vegetable protein sources.

## Claims

1. A process for reducing body fat and preserving skeletal muscle mass in a geriatric dog to mitigate the effects of age comprising the step of feeding said dog a diet including greater than 16% by weight animal-based protein on a dry matter basis.

2. The process claimed in claim 1 in which said diet includes from between 24 to 34% by weight protein on a dry matter basis.

3. The process claimed claim 1 in which said diet comprises, on a dry matter basis, 24 to 34% by weight protein, 9 to 22% by weight fat, and 1 to 6% total dietary fiber.

4. The process claimed in any preceding claim wherein said animal-based protein is selected from the group consisting of chicken, lamb, beef, fish, duck, deer, rabbit, pork, and mixtures thereof.

5. The process claimed in claim 4 wherein said animal-based protein comprises chicken.

## Patentansprüche

1. Verfahren zum Verringern von Körperfett und Erhalten von Skelettmuskelmasse bei einem geriatrischen Hund, um die Alterseffekte zu mildern, umfassend den Schritt des Fütterns des Hundes mit einer Nahrung, welche auf Trockensubstanzbasis mehr als 16 Gew.-% Protein tierischer Basis beinhaltet.

2. Verfahren nach Anspruch 1, wobei die Nahrung auf Trockensubstanzbasis zwischen 24 und 34 Gew.-% Protein beinhaltet.

3. Verfahren nach Anspruch 1, wobei die Nahrung auf Trockensubstanzbasis 24 bis 34 Gew.-% Protein, 9 bis 22 Gew.-% Fett und 1 bis 6% Gesamtnahrungsfasern umfasst.

4. Verfahren nach mindestens einem vorangehenden Anspruch, wobei das Protein tierischer Basis aus der Gruppe gewählt ist, bestehend aus Huhn, Lamm, Rind, Fisch, Ente, Rotwild, Kaninchen, Schwein und Mischungen hiervon.

5. Verfahren nach Anspruch 4, wobei das Protein tierischer Basis Huhn umfasst.

## Revendications

1. Procédé de réduction de la graisse corporelle et de conservation de la masse musculaire squelettique chez un chien vieillissant pour atténuer les effets de l'âge comprenant les étapes consistant à fournir audit chien un régime comprenant plus de 16 % en poids de protéines animales sur une base en matière sèche.

2. Procédé selon la revendication 1, dans lequel ledit régime comprend entre 24 à 34 % en poids de protéines sur une base en matière sèche.

3. Procédé selon la revendication 1, dans lequel ledit régime comprend, sur une base en matière sèche, 24 à 34 % en poids de protéines, 9 à 22 % en poids de graisses, et 1 à 6 % en poids de fibres alimentaires.

4. Procédé selon l'une quelconque des revendications précédentes, dans lequel lesdites protéines animales sont choisies dans le groupe constitué par des protéines de poulet, de mouton, de boeuf, de poisson, de canard, de daim, de lapin, de porc, et leurs mélanges.

5. Procédé selon la revendication 4, dans lequel lesdites protéines animales comprennent des protéines de poulet.
